# EUROPÄISCHE PATENTSCHRIFT

(11) **EP 4 077 049 B1**
(45) Veröffentlichungstag und Bekanntmachung des Hinweises auf die Patenterteilung: **13.09.2023**
(21) Anmeldenummer: 20819691.5
(22) Anmeldetag: 02.12.2020
(51) Int. Cl.: B60Q 3/54, B60R 13/02, B60K 37/06

(54) **BEDIENEINHEIT FÜR EIN KRAFTFAHRZEUG**
OPERATING UNIT FOR A MOTOR VEHICLE
UNITÉ D'ACTIONNEMENT POUR UN VÉHICULE À MOTEUR

(30) Priorität: 16.12.2019 DE 102019134504
(43) Veröffentlichungstag der Anmeldung: 26.10.2022
(73) Patentinhaber: Lisa Dräxlmaier GmbH, 84137 Vilsbiburg (DE)
(72) Erfinder: PAINTNER, Linda, 84032 Landshut (DE); WINDL, Michael, 84028 Landshut (DE)
(86) Internationale Anmeldenummer: PCT/EP2020/084233
(87) Internationale Veröffentlichungsnummer: WO 2021/121993

(56) Entgegenhaltungen:
- EP-A2- 0 503 197
- WO-A1-2013/071076
- DE-A1-102009 024 989
- US-A1- 2002 101 738
- US-A1- 2015 277 735
- US-A1- 2015 279 523
- US-A1- 2017 262 057

## Beschreibung

### Technisches Gebiet

Die vorliegende Erfindung betrifft eine Bedieneinheit für ein Kraftfahrzeug.

### Stand der Technik

Bei Kraftfahrzeugen nimmt die Funktionsvielfalt immer stärker zu. Insbesondere im Interieurbereich besteht daher eine Herausforderung darin, Fahrzeuginsassen eine möglichst einfache Bedienbarkeit der vielfältigen Funktionen zu ermöglichen. Gleichzeitig gibt es oft Bestrebungen, insbesondere den Interieurbereich von Kraftfahrzeugen optisch auch bei vielen erforderlichen Bedienelementen nicht zu sehr zu überfrachten und dennoch ansprechend zu gestalten.

Zum Teil gibt es schon Bedienbereiche bzw. Bedienelemente, welche bewusst hinter einer Oberfläche versteckt liegen, z.B. hinter Dekorschichten. Beispielsweise über eine kapazitive Sensorik oder auch über eine drucksensitive Sensorik ist es so möglich, dass Benutzer diese Bedienbereiche bzw. Bedienelemente betätigen, um unterschiedlichste Funktionen auszulösen bzw. zu steuern. Bei solchen hinter einer Oberfläche versteckt angeordneten Bedienelementen bzw. Bedienbereichen kann es allerdings zu Schwierigkeiten beim Auffinden der Bedienelemente bzw. Bedienbereiche kommen.

Die EP 0 503 197 A2 offenbart eine Tastatur, etwa für ein Mobiltelefon, bei welcher jede Taste hinterleuchtbar ist. Eine teilweise durchscheinende Deckschicht aus flexiblem Material enthält eine erhabene Taste, unter welcher eine Betätigungsschicht angeordnet ist, die nach unten drückbar ist. Unter der Betätigungsschicht ist eine taktile Rückkopplungsschicht mit einer Kuppel für die Taste angebracht, wobei unter einem Drücken der Taste die Kuppel auf einem Substrat aufgebrachte Leiterbahnen kurzgeschlossen werden. Die Tasten werden mittels einer sich durch das Substrat hindurcherstreckenden Lichtquelle hinterleuchtet.

Die WO2013071076 A1 offenbart eine Bedieneinheit nach dem Oberbegriff von Anspruch 1.

### Beschreibung der Erfindung

Es ist daher die Aufgabe der Erfindung, eine Bedieneinheit für ein Kraftfahrzeug bereitzustellen, die sich trotz hinter einer Oberfläche verborgen angeordneter Bedienbereiche einfach durch einen Benutzer bedienen lässt.

Diese Aufgabe wird durch eine Bedieneinheit für ein Kraftfahrzeug mit den Merkmalen des Anspruchs 1 gelöst. Weitere mögliche Ausgestaltungen der Erfindung sind insbesondere in den abhängigen Ansprüchen angegeben.

Die erfindungsgemäße Bedieneinheit für ein Kraftfahrzeug umfasst ein durchleuchtbares Trägerteil. Zumindest mittelbar auf dem Trägerteil ist eine durchleuchtbare Dekorschicht angeordnet, die zur Kennzeichnung von zumindest einem Bedienbereich der Bedieneinheit an ihrer vom Trägerteil abgewandten Sichtseite wenigstens einen ertastbaren Vorsprung und/oder eine ertastbare Vertiefung aufweist. Die Bedieneinheit umfasst des Weiteren eine unterhalb vom Trägerteil angeordnete Beleuchtungseinrichtung, welche dazu ausgelegt ist, die Dekorschicht rückseitig zu durchleuchten. Die Bedieneinheit umfasst des Weiteren eine zwischen der Dekorschicht und der Beleuchtungseinrichtung angeordnete Schablone, die lichtdunurchlässige Bereiche und zumindest einen unterhalb von wenigstens einen Bedienbereich angeordneten durchleuchtbaren Bereich zur Durchleuchtung des wenigstens einen Bedienbereichs aufweist. Die Bedieneinheit kann beispielsweise auch bei Textilien, Luftfahrzeugen, anderen Landfahrzeugen, Wasserfahrzeugen, Möbeln und Home-Interieuranwendungen verbaut werden.

Es ist auch möglich, die Schablone wegzulassen, sodass die Dekorschicht vollflächig durchleuchtet werden kann. Die Schablone kann auch in Form von einer Farbschicht. Lackschicht und/oder Folie auf das Trägerteil oder die Beleuchtungseinheit, z.B. in Form eines Bildschirms, aufgetragen sein. Sämtliche Arten einer scharfkantigen und/oder soften Maskierung sind möglich.

Das Trägerteil muss nicht vollständig durchleuchtbar sein. Es kann ausreichen, wenn das Trägerteil zumindest in dem Bereich, wo der wenigstens eine Bedienbereich vorgesehen ist, durchleuchtbar ist. Die Sichtseite der Dekorschicht kann eine Interieuroberfläche oder auch eine Exterieuroberfläche sein. So kann die Bedieneinheit beispielsweise in einem Fahrzeuginnenraum angeordnet sein, wobei die Sichtseite der Dekorschicht beispielsweise im Bereich einer Mittelkonsole, einem Armaturenbrett oder in beliebigen anderen Bereichen im Fahrzeuginnenraum angeordnet sein kann. Bei entsprechender Materialauswahl hinsichtlich der Dekorschicht ist es auch möglich, dass die Sichtseite der Dekorschicht eine Exterieuroberfläche des betreffenden Kraftfahrzeugs bildet.

Dadurch, dass der zumindest eine Bedienbereich der Bedieneinheit haptisch erfassbar durch den ertastbaren Vorsprung und/oder die ertastbare Vertiefung gekennzeichnet ist, ist es auch bei deaktivierter Beleuchtungseinrichtung für einen Benutzer auf einfache Weise möglich, den wenigstens einen Bedienbereich zu ertasten und somit auch zu bedienen. Insbesondere kann die Bedieneinheit mehrere Bedienbereiche aufweisen, wobei zur jeweiligen Kennzeichnung dieser Bedienbereiche die Dekorschicht an ihrer vom Trägerteil abgewandten Sichtseite jeweils zumindest einen ertastbaren Vorsprung und/oder eine ertastbare Vertiefung aufweist. Wenn die Bedieneinheit mehrere solcher Bedienbereiche aufweist, ist die Schablone entsprechend ausgestaltet. Dies bedeutet, dass die Schablone zumindest unterhalb von den jeweiligen Bedienbereichen einen jeweils durchleuchtbaren Bereich zur Durchleuchtung der jeweiligen Bedienbereiche aufweist. Die Vorsprünge und/oder Vertiefungen können verschiedenste Formen bzw. Geometrien aufweisen.

Die Bedieneinheit ist also in zumindest einen durchleuchtbaren Bereich und einen nicht durchleuchtbaren Bereich unterteilt. Insbesondere dort, wo die Durchleuchtung stattfinden kann, weist die Bedieneinheit von der Sichtseite her ertastbare und insbesondere auch sichtbare Höhenunterschiede auf, welche durch besagten Vorsprung und/oder besagte Vertiefung gebildet werden. Die Dekorschicht kann insbesondere nahtlos über die gesamte Oberfläche der Bedieneinheit ausgebildet sein. Der wenigstens eine ertastbare Bedienbereich kann somit auf einer durchgängigen Oberfläche bereitgestellt werden, wobei aufgrund des wenigstens einen ertastbaren Vorsprungs und/oder der wenigstens einen ertastbaren Vertiefung der wenigstens eine Bedienbereich von einem Benutzer ganz einfach erkannt werden kann, ohne dass am Oberflächenmaterial, also an der Sichtseite der Dekorschicht, auf den ersten Blick eine markante optische Abgrenzung vorliegt. So kann beispielsweise die Bedieneinheit mit einer optisch besonders ruhigen Anmutung z.B. in ein Interieur des betreffenden Kraftfahrzeugs integriert werden.

Bei der erfindungsgemäßen Bedieneinheit kann es vorgesehen sein, dass die Dekorschicht also über das ganze Trägerteil hinweg verläuft und nicht z. B. durch Nähte, Aussparungen, Bauteiltrennungen oder abgesetzte Bedienelemente unterbrochen wird. Zur haptischen und/oder optischen Kennzeichnung des Bedienbereichs oder der Bedienbereiche ist also eine dreidimensionale Oberflächenstruktur an der Sichtseite der Dekorschicht ausgebildet. Wenn die Beleuchtungseinheit aktiviert bzw. eingeschaltet ist, kann im Prinzip ein beliebiges Lichtszenario dynamisch, ganzflächig, partiell oder situationsabhängig geschaffen werden, sodass der zumindest eine Bedienbereich, mehrere Bedienbereiche oder auch andere Bereiche der Bedieneinheit hinterleuchtet und somit durchleuchtet werden können. Bei deaktivierter Beleuchtungseinrichtung hingegen stellt sich besagtes durchgängig einheitliches Oberflächenerscheinungsbild bei der Bedieneinheit ein.

Die erfindungsgemäße Bedieneinheit kann beispielsweise insbesondere bei einem autonomen Fahrbetrieb besonders gut eingesetzt werden, wenn das betreffende Fahrzeug quasi als Wohnbereich dienen kann, welche immer mehr Beleuchtungsfunktionen und versteckte Schaltmechanismen aufweisen kann. Mittels der Bedieneinheit ist es zudem auch auf einfache Weise möglich, unterschiedliche Status von verschiedenen Funktionen, also aktiv oder inaktiv, darzustellen. Traditionelle, aber auch neuartige Oberflächen können mit verschiedensten Elektrik- und Elektronikkomponenten verknüpft werden. Bei der Dekorschicht kann es sich z. B. um ein Textil, ein Leder, einen Kunststoff oder dergleichen handeln. Wesentlich ist, dass die Dekorschicht zumindest dort, wo der wenigstens eine Bedienbereich vorgesehen ist, durchleuchtet werden kann. Hinsichtlich der Materialauswahl für die Dekorschicht sind an sich keine Grenzen gesetzt, solange diese Durchleuchtbarkeit erreicht werden kann.

Eine mögliche Ausgestaltung der Erfindung sieht vor, dass unter der Dekorschicht wenigstens ein Haptikelement angeordnet ist, welches sich zumindest als ein Teilbereich des Vorsprungs an der Sichtseite der Dekorschicht abzeichnet. Die Dekorschicht überspannt also das Haptikelement so, dass sich das Haptikelement als Höhenunterschied an der Sichtseite der Dekorschicht abzeichnet. Auf diese Weise ist es ganz einfach möglich, die haptisch ertastbare Kennzeichnung des wenigstens einen Bedienbereichs vorzunehmen. Beispielsweise kann das Haptikelement mit der Dekorschicht verklebt sein, sodass sich die Dekorschicht besonders gut an das Haptikelement anschmiegt. Andere Verbindungsmöglichkeiten können aber ebenfalls genutzt werden. Eine Kleberschicht, welche zum Fixieren des Haptikelements verwendet wird, kann lichtdurchlässig sein, ebenso das gesamte Haptikelement oder zumindest Bereiche davon.

Es ist auch möglich, dass das Trägerteil ganzflächig mit dem Haptikelement beaufschlagt ist, bei dem die ertastbaren Bedienbereiche noch zusätzlich erhaben oder vertieft sind. Diese zusätzlichen Bereiche können entweder separat auf das ganzflächige Haptikelement aufgeklebt sein oder aber das Haptikelement bekommt die Erhöhungen/Vertiefungen durch Formguss oder manuelle Bearbeitung. Also kann ein Haptikelement auch mehrschichtig sein, z.B. bei Sitzbereichen mit Schaumstoff.

Eine weitere mögliche Ausgestaltung der Erfindung sieht vor, dass das Haptikelement ein Abstandsgewirke, einen Schaumstoff und/oder ein Kunststoffplättchen aufweist. Insbesondere kann das Haptikelement eine Weichkomponente umfassen, sodass ein Benutzer die Dekorschicht an der Stelle, wo das Haptikelement angeordnet ist, quasi wie einen Schalter oder eine Taste herunterdrücken kann.

Gemäß einer weiteren möglichen Ausgestaltung der Erfindung ist es vorgesehen, dass das Trägerteil auf einer der Dekorschicht zugewandten Seite wenigstens eine Vertiefung aufweist, welche sich zumindest als ein Teilbereich der Vertiefung abzeichnet. Dadurch kann auf einfache Weise die ertastbare Vertiefung auf der Sichtseite der Dekorschicht geschaffen werden. Die Dekorschicht schmiegt sich insbesondere im Bereich der Vertiefung des Trägerteils an dieses an, sodass an der Sichtseite der Dekorschicht besagte Vertiefung ausgebildet wird.

Eine weitere mögliche Ausgestaltung der Erfindung sieht vor, dass der Vorsprung und/oder die Vertiefung zumindest teilweise durch eine lokale Änderung einer Materialstärke der Dekorschicht gebildet ist. Durch lokale Dickenvariationen der Dekorschicht ist es also möglich, den wenigstens einen Vorsprung und/oder die wenigstens eine Vertiefung zu schaffen, welche dazu dient, den wenigstens einen Bedienbereich insbesondere haptisch erfassbar zu machen. Durch lokale Dickenvariationen der Dekorschicht, beispielsweise durch lokales Verpressen der Dekorschicht oder auch durch andere Vorgehensweisen, können ganz einfach Vorsprünge und/oder Vertiefungen geschaffen werden.

Eine weitere mögliche Ausgestaltung der Erfindung sieht vor, dass die Bedieneinheit eine kapazitive und/oder drucksensitive Erfassungseinrichtung aufweist, die dazu ausgelegt ist, Betätigungen des wenigstens einen Bedienbereichs zu erfassen. Bei der kapazitiven Erfassungseinrichtung kann es sich beispielsweise um eine kapazitive Folie handeln, die dazu ausgelegt ist, Bedienhandlungen bzw. Betätigungshandlungen an dem wenigstens einen Bedienbereich zu erfassen. Alternativ oder zusätzlich können an dem wenigstens einen Bedienbereich auch Drucksensoren und dergleichen vorgesehen sein, mittels welchen eine Druckbeaufschlagung erfasst werden kann. Mittels der kapazitiven und/oder drucksensitiven Erfassungseinrichtung ist es möglich, Bedienhandlungen an dem wenigstens einen Bedienbereich ganz einfach zu erfassen und beispielsweise an eine Steuereinrichtung des Kraftfahrzeugs weiterzuleiten, welche in Abhängigkeit davon jeweils zugeordnete Funktionen auslöst.

In weiterer möglicher Ausgestaltung der Erfindung ist es vorgesehen, dass die Schablone an einer der Dekorschicht zugewandten Oberseite oder an einer von der Dekorschicht abgewandten Unterseite des Trägerteils angeordnet ist. Ist die Schablone oberseitig am Trägerteil angeordnet, so kann sich der Vorteil ergeben, dass weniger Lichtstreuungen beim Durchtritt durch die lichtdurchlässigen Bereiche der Schablone entstehen. Dadurch kann der zumindest eine Bedienbereich besonders exakt hinterleuchtet bzw. durchleuchtet werden. Wird die Dekorschicht hingegen an der Unterseite des Trägerteils angeordnet, so kann sich die Montage bzw. Anbringung der Dekorschicht an der Oberseite des Trägerteils unter Umständen leichter gestalten.

Eine weitere mögliche Ausgestaltung der Erfindung sieht vor, dass die Schablone und das Trägerteil als einteiliges Bauteil ausgebildet sind. In dem Fall muss die Schablone nicht erst aufwendig am Trägerteil befestigt und angeordnet werden. Beispielsweise ist es möglich, dass das Trägerteil ein Zwei-Komponententeil, insbesondere ein Zwei-Komponenten-Spritzgussteil ist, wobei die Schablone aus einer ersten Komponente und das restliche Trägerteil aus einer zweiten Komponente hergestellt ist. Die erste Komponente kann dabei vollständig lichtundurchlässig sein, wobei die zweite Komponente beispielsweise vollständig lichtdurchlässig sein kann. Insbesondere im Zwei-Komponenten-Spritzgussverfahren ist es möglich, die Schablone und das Trägerteil in hohen Stückzahlen als einstückiges bzw. einteiliges Bauteil kostengünstig und schnell herzustellen.

Eine weitere mögliche Ausgestaltung der Erfindung sieht vor, dass die Schablone als Beschichtung auf das Trägerteil aufgebracht ist. Die Schablone kann beispielsweise auf das Trägerteil aufgedruckt sein. Alternativ ist es auch möglich, dass die Schablone eine mit dem Trägerteil verbundene Folie ist. Wenn die Schablone und das Trägerteil also separate Bauteile bzw. Schichten bilden, kann das Trägerteil beispielsweise variantenunabhängig in besonders großen Stückzahlen hergestellt werden. Die Schablone kann dann individuell für unterschiedliche Beleuchtungsfunktionen angepasst werden, indem jeweils dazu passende Aussparungen vorgesehen werden, je nachdem wo die Lichtdurchtritte erfolgen sollen. So muss nicht der gesamte Bauteilverbund aus Schablone und Trägerteil variantenspezifisch angepasst werden.

Eine weitere mögliche Ausgestaltung der Erfindung sieht vor, dass die Beleuchtungseinrichtung dazu ausgelegt ist, zumindest ein Symbol und/oder zumindest ein Schriftzeichen anzuzeigen, das sich bei aktivierter Beleuchtungseinrichtung an der Sichtseite der Dekorschicht zumindest an einem Teil des wenigstens einen Bedienbereichs optisch abzeichnet. Bei der Beleuchtungseinrichtung kann es sich beispielsweise um ein Display handeln. So ist es beispielsweise möglich, dass es sich um ein OLED-Display handelt, welches sehr dünn ausgeführt sein kann. Wenn es sich bei der Beleuchtungseinrichtung um ein Display handelt, können verschiedenste Symbole, Schriftzeichen oder auch andere Elemente an verschiedensten Stellen angezeigt werden, um den wenigstens einen Bedienbereich oder auch weitere Bedienbereiche der Bedieneinheit zu hinterleuchten und zu durchleuchten. In dem Fall ist es auch möglich, die anzuzeigenden Symbole, Schriftzeichen oder dergleichen je nach Bediensituation oder beispielsweise mittels Software-Updates anzupassen.

Gemäß einer weiteren möglichen Ausgestaltung der Erfindung ist es vorgesehen, dass das Trägerteil und/oder die Schablone wenigstens ein Symbol und/oder wenigstens ein Schriftzeichen aufweist, das sich bei aktivierter Beleuchtungseinrichtung an der Sichtseite der Dekorschicht zumindest an einem Teil des wenigstens einen Bedienbereichs optisch abzeichnet. Die Symbole und/oder Schriftzeichen können zum Beispiel lichtundurchlässige Maskierungen sein, wobei in dem Fall die Symbole und/oder Schriftzeichen bei aktivierter Beleuchtungseinrichtung sich als dunkle Bereiche optisch abzeichnen. Die Symbole und/oder Schriftzeichen können zum Beispiel auch lichtdurchlässige Bereiche sein. In dem Fall zeichnen sich die Symbole und/oder Schriftzeichen bei aktivierter Beleuchtungseinrichtung als erleuchtete bzw. durchleuchtete Bereiche ab. Beispielsweise kann es vorgesehen sein, dass nur das Trägerteil und/oder nur die Schablone dafür sorgt, unterschiedliche Arten von Symbolen, Schriftzeichen und dergleichen bei dem wenigstens einen Bedienbereich anzuzeigen. In dem Fall kann die Beleuchtungseinrichtung besonders einfach gestaltet sein, muss letztlich einfach nur eine Lichtquelle sein, ohne dass sie dafür sorgen können muss, Symbole, Schriftzeichen oder dergleichen anzuzeigen. Auch ist es möglich, das Anzeigen von Symbolen, Schriftzeichen oder dergleichen sowohl auf die Beleuchtungseinrichtung als auch auf das Trägerteil und/oder die Schablone aufzuteilen.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

### Kurze Figurenbeschreibung

Die Zeichnung zeigt in:
- Fig. 1:: eine Perspektivansicht einer Bedieneinheit für ein Kraftfahrzeug, umfassend ein durchleuchtbares Trägerteil, an dem oberseitig eine durchleuchtbare Dekorschicht angeordnet ist, die zur Kennzeichnung mehrerer Bedienbereiche an ihrer vom Trägerteil abgewandten Sichtseite mehrere ertastbare Vorsprünge aufweist, wobei zur Steuerung einer Durchleuchtung der Bedienbereiche unterhalb vom Trägerteil eine Schablone sowie eine Beleuchtungseinrichtung angeordnet sind;
- Fig. 2:: eine weitere Perspektivansicht der Bedieneinheit;
- Fig. 3:: eine Draufsicht auf die Bedieneinheit in unbeleuchtetem Zustand;
- Fig. 4:: eine Draufsicht auf die Bedieneinheit in beleuchtetem Zustand.

In den Figuren sind gleiche oder funktionsgleiche Elemente mit den gleichen Bezugszeichen versehen.

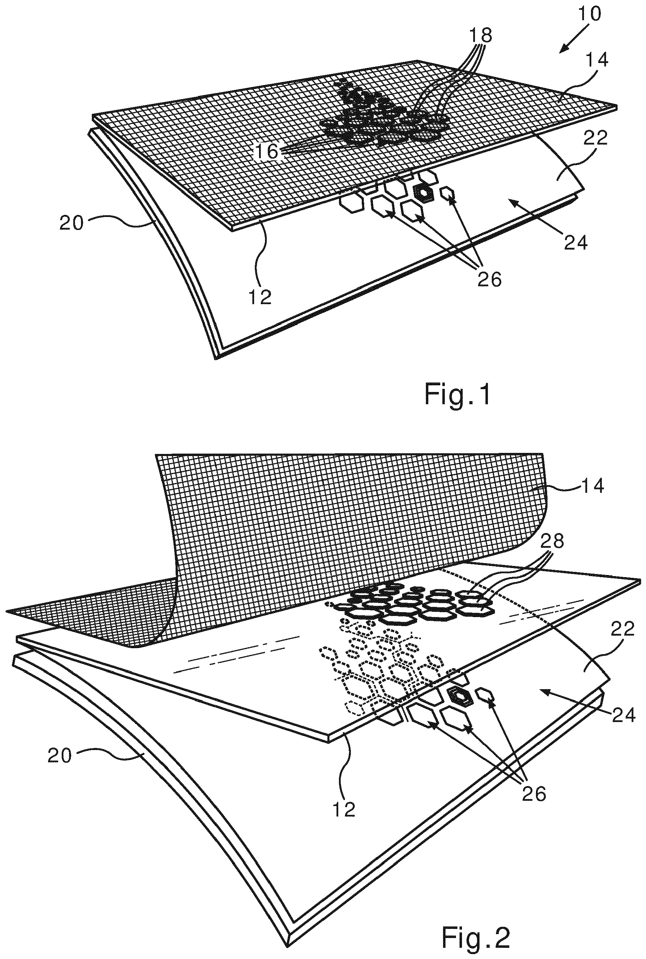

Eine Bedieneinheit 10 für ein Kraftfahrzeug ist in einer Perspektivansicht in Fig. 1 gezeigt. Die Bedieneinheit 10 ist vorliegend im noch nicht fertig zusammengebauten Zustand gezeigt, sodass der schichtweise Aufbau der Bedieneinheit 10 deutlich wird. Die Bedieneinheit 10 weist ein zumindest teilweise durchleuchtbares Trägerteil 12 auf. Am Trägerteil 12 ist eine durchleuchtbare Dekorschicht 14 angeordnet, die zur Kennzeichnung mehrerer Bedienbereiche 16 an ihrer vom Trägerteil abgewandten Sichtseite jeweilige ertastbare Vorsprünge 18 aufweist. Unterhalb vom Trägerteil 12 ist eine schematisch angedeutete Beleuchtungseinrichtung 20 angeordnet, welche dazu ausgelegt ist, die Dekorschicht 14 rückseitig zu durchleuchten.

Zwischen der Dekorschicht 14 und der Beleuchtungseinrichtung 20 ist zudem noch eine Schablone 22 angeordnet, die lichtundurchlässige Bereiche 24 und durchleuchtbare bzw. lichtdurchlässige Bereiche 26 aufweist. Die lichtdurchlässigen Bereiche 26 sind unterhalb von den jeweiligen Bedienbereichen 16 vorgesehen, sodass diese mittels der Beleuchtungseinrichtung 20 hinterleuchtet bzw. durchleuchtet werden können. Die lichtdurchlässigen Bereiche 26 müssen nicht immer genauso groß sein, wie die Bedienbereiche 16. Insbesondere können die lichtdurchlässigen Bereiche 26 kleiner sein als die jeweiligen Bedienbereiche 16.

Die Dekorschicht 14 kann beispielsweise aus einem Textil, einem Leder, einem Kunststoff, insbesondere einer Softtouch-Oberfläche, Planware, Holz, Metall oder dergleichen hergestellt sein. Wesentlich bei der Dekorschicht 14 ist, dass diese durchleuchtet werden kann, zumindest dort, wo sich die Bedienbereiche 16 befinden. Durch Mikroperforation können auch an sich nicht durchleuchtbare Materialien ganzflächig oder partiell durchleuchtet werden. Im vorliegend gezeigten Fall handelt es sich bei der Bedieneinheit 10 um ein Innenausstattungsteil bzw. um ein Interieurbauteil. Die Dekorschicht 14 kann beispielsweise im Bereich einer Mittelkonsole, an einer Türinnenverkleidung, an einem Armaturenbrett oder an beliebigen anderen Stellen in einem Fahrzeuginnenraum vorgesehen sein. Es ist aber auch möglich, dass die Sichtseite der Dekorschicht 14 eine Exterieuroberfläche eines Kraftfahrzeugs bildet. In dem Fall ist die Bedieneinheit 10 so ausgebildet, dass sie Witterungseinflüssen problemlos standhalten kann.

In Fig. 2 ist die Bedieneinheit 10 wiederum in einer Perspektivansicht gezeigt, in welcher der schichtweise Aufbau der Bedieneinheit 10 deutlich wird. Vorliegend sind erstmals Haptikelemente 28 zu erkennen, die unter der Dekorschicht 14 angeordnet sind. Diese Haptikelemente 28 zeichnen sich in Form der Vorsprünge 18 (siehe Fig. 1) an der Sichtseite der Dekorschicht 14 ab. Die Haptikelemente 28 können insbesondere aus einer Art Weichkomponente hergestellt sein, sodass diese nachgiebig sind und ein Benutzer die Haptikelemente 28 ein wenig zusammendrücken kann, wenn er die Bedienbereiche 16 mit Druck beaufschlagt. Die Haptikelemente 28 können beispielsweise ein Abstandsgewirk, ein Schaumstoff- und/oder ein Kunststoffplättchen aufweisen.

Alternativ oder zusätzlich zu den Haptikelementen 28 kann das Trägerteil 12 entgegen der vorliegenden Darstellung auf einer der Dekorschicht 14 zugewandten Seite beispielsweise Vertiefungen und/oder Erhöhungen aufweisen, welche sich dann als Vertiefungen bzw. Erhöhungen an der Dekorschicht 14 im Bereich der Bedienbereiche 16 abzeichnen können. Auch ist es möglich, durch eine lokale Variation einer Materialstärke der Dekorschicht 14 Vorsprünge und/oder Vertiefungen an den Stellen zu schaffen, wo die Bedienbereiche 16 vorgesehen sind.

Die Bedieneinheit 10 kann eine hier nicht dargestellte kapazitive und/oder drucksensitive Erfassungseinrichtung aufweisen, die dazu ausgelegt ist, jeweilige Betätigungen der Betätigungsbereiche 16 zu erfassen. Beispielsweise kann unterseitig an der Dekorschicht 14 eine kapazitive Folie und/oder eine drucksensitive Folie angebracht sein, um Betätigungshandlungen von Benutzern an den jeweiligen Bedienbereichen 16 zu erfassen. Zudem ist es auch möglich, Heizungselemente und/oder ein Heizschicht vorzusehen. Die Heizungselemente und/oder ein Heizschicht können z.B. oberhalb oder unterhalb vom Trägerteil 12 angeordnet sein.

Im vorliegend gezeigten Fall ist die Schablone 22 unterhalb vom Trägerteil 12 angeordnet. Genauso gut kann die Schablone 22 aber auch oberhalb vom Trägerteil 12 angeordnet sein, also zwischen diesem und der Dekorschicht 14. Vorliegend ist die Schablone 22 als separate Schicht bzw. als separates Bauteil ausgebildet. Alternativ ist es auch möglich, dass die Schablone 22 und das Trägerteil 12 als einteiliges Bauteil ausgebildet sind, die Schablone 22 also integraler Bestandteil des Trägerteils 12 ist. Beispielsweise kann das Trägerteil 12 ein Zwei-Komponenten-Spritzgussteil sein, wobei die Schablone 24 aus einer ersten lichtundurchlässigen Komponente und das restliche Trägerteil 12 aus einer zweiten lichtdurchlässigen Komponente hergestellt ist. Die Schablone 22 kann auch beispielsweise als Beschichtung auf dem Trägerteil 12 aufgebracht werden. Beispielsweise kann die Schablone 22 auf das Trägerteil 12 aufgedruckt werden. Auch ist es möglich, dass die Schablone 22 eine mit dem Trägerteil 12 verbundene Folie ist.

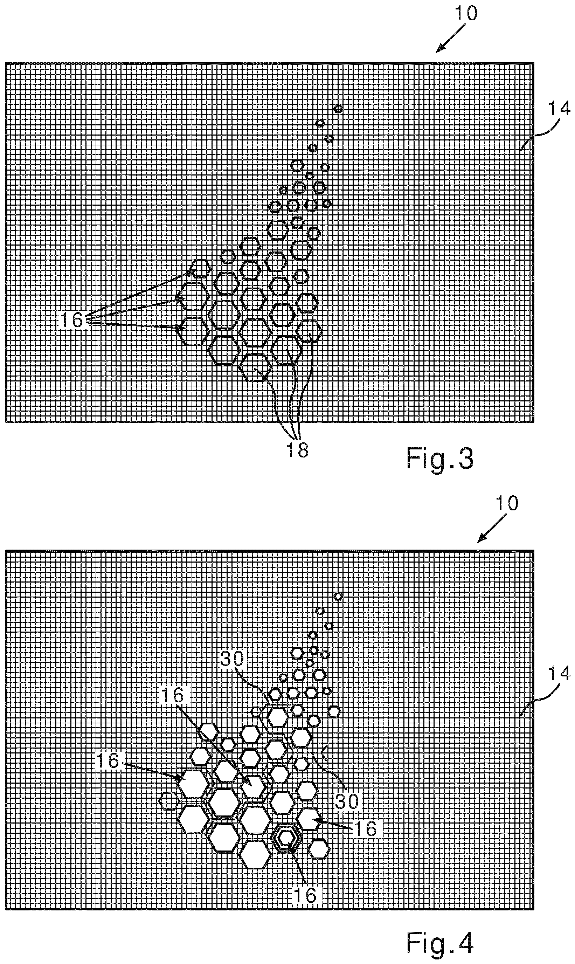

In Fig. 3 ist die Bedieneinheit 10 in einer Draufsicht gezeigt, wobei die hier nicht erkennbare Beleuchtungseinrichtung 20 deaktiviert ist. Die Bedienbereiche 16 zeichnen sich haptisch erfassbar an der Sichtseite der Dekorschicht 14 durch die Vorsprünge 18 ab. Dennoch kann ein durchgängiges bzw. einheitliches Oberflächenerscheinungsbild bei der Bedieneinheit 10 erreicht werden, da die Dekorschicht 14 beispielsweise keine Nähte, Aussparungen, Bauteiltrennungen oder separate Bedienelemente aufweist, welche das optische Erscheinungsbild der Bedieneinheit 10 unterbrechen würden.

In Fig. 4 ist die Bedieneinheit 10 in einer weiteren Draufsicht gezeigt, wobei nun die hier nicht erkennbare Beleuchtungseinrichtung 20 aktiviert wurde. Dadurch werden die jeweiligen Bedienbereiche 16 hinterleuchtet und somit durchleuchtet. Es können auch noch andere durchleuchtbare Bereiche 30 vorgesehen sein, welche sich nicht in dem Bedienbereich 16 befinden. Die Beleuchtungseinrichtung 20 kann beispielsweise dazu ausgelegt sein, verschiedenste Symbole, Schriftzeichen oder dergleichen anzuzeigen, die sich bei aktivierter Beleuchtungseinrichtung 20 an der Sichtseite der Dekorschicht 14 und insbesondere an den Bedienbereichen 16 optisch abzeichnen. Alternativ oder zusätzlich können das Trägerteil 12 und/oder die Schablone 22 Symbole, Schriftzeichen oder dergleichen aufweisen, die sich bei aktivierter Beleuchtungseinrichtung 20 an der Sichtseite der Dekorschicht 14 zumindest in den jeweiligen Bedienbereichen 16 abzeichnen. So ist es möglich, auf unterschiedlichste Weise verschiedene Lichtszenarien zu generieren, die sich dynamisch, ganzflächig, partiell und/oder situationsabhängig unterschiedlich darstellen. Die einzelnen Bedienbereiche 16 werden durch die Hinterleuchtung bzw. Durchleuchtung dann sichtbar, wobei zudem auch durch Hinterleuchtung anderer Bereiche 30 zum Beispiel eine Ambientebeleuchtung in einem Fahrzeuginnenraum realisiert werden kann.

### BEZUGSZEICHENLISTE

- 10: Bedieneinheit
- 12: Trägerteil
- 14: Dekorschicht
- 16: Bedienbereiche
- 18: Vorsprünge
- 20: Beleuchtungseinrichtung
- 22: Schablone
- 24: lichtundurchlässige Bereiche der Schablone
- 26: lichtdurchlässige Bereiche der Schablone
- 28: Haptikelemente
- 30: weitere Bereiche der Dekorschicht, die durchleuchtet werden können

## Patentansprüche

1. Bedieneinheit (10) für ein Kraftfahrzeug, umfassend
- ein durchleuchtbares Trägerteil (12);
- eine zumindest mittelbar auf dem Trägerteil (12) angeordnete durchleuchtbare Dekorschicht (14), die zur Kennzeichnung von zumindest einem Bedienbereich (16) an ihrer vom Trägerteil (12) abgewandten Sichtseite wenigstens einen ertastbaren Vorsprung (18) und/oder eine ertastbare Vertiefung aufweist;
**gekennzeichnet durch**
- eine unterhalb vom Trägerteil (12) angeordnete Beleuchtungseinrichtung (20), welche dazu ausgelegt ist, die Dekorschicht (14) rückseitig zu durchleuchten;
- eine zwischen der Dekorschicht (14) und der Beleuchtungseinrichtung (20) angeordnete Schablone (22), die lichtundurchlässige Bereiche (24) und zumindest einen unterhalb von dem wenigstens einen Bedienbereich (16) angeordneten durchleuchtbaren Bereich (26) zur Durchleuchtung des wenigstens einen Bedienbereichs (16) aufweist.

2. Bedieneinheit (10) nach Anspruch 1,
**dadurch gekennzeichnet, dass**
die Sichtseite der Dekorschicht (14) eine Interieuroberfläche oder eine Exterieuroberfläche ist.

3. Bedieneinheit (10) nach Anspruch 1 oder 2,
**dadurch gekennzeichnet, dass**
unter der Dekorschicht (14) wenigstens ein Haptikelement (28) angeordnet ist, welches sich zumindest als ein Teilbereich des Vorsprungs (18) an der Sichtseite der Dekorschicht (14) abzeichnet.

4. Bedieneinheit (10) nach Anspruch 2,
**dadurch gekennzeichnet, dass**
das Haptikelement (28) ein Abstandsgewirke, ein Schaumstoff- und/oder ein Kunststoffplättchen aufweist.

5. Bedieneinheit (10) nach einem der vorhergehenden Ansprüche,
**dadurch gekennzeichnet, dass**
das Trägerteil (12) auf einer der Dekorschicht (14) zugewandten Seite wenigstens eine Vertiefung aufweist, welche sich zumindest als ein Teilbereich der Vertiefung abzeichnet.

6. Bedieneinheit (10) nach einem der vorhergehenden Ansprüche,
**dadurch gekennzeichnet, dass**
der Vorsprung (18) und/oder die Vertiefung zumindest teilweise durch eine lokale Änderung einer Materialstärke der Dekorschicht (14) gebildet ist.

7. Bedieneinheit (10) nach einem der vorhergehenden Ansprüche,
**dadurch gekennzeichnet, dass**
die Bedieneinheit (10) eine kapazitive und/oder drucksensitive Erfassungseinrichtung aufweist, die dazu ausgelegt ist, Betätigungen des wenigstens einen Bedienbereichs (16) zu erfassen.

8. Bedieneinheit (10) nach einem der vorhergehenden Ansprüche,
**dadurch gekennzeichnet, dass**
die Schablone (22) an einer der Dekorschicht (14) zugewandten Oberseite oder an einer von der Dekorschicht (14) abgewandten Unterseite des Trägerteils (12) angeordnet ist.

9. Bedieneinheit (10) nach einem der vorhergehenden Ansprüche,
**dadurch gekennzeichnet, dass**
die Schablone (22) und das Trägerteil (12) als einteiliges Bauteil ausgebildet sind.

10. Bedieneinheit (10) nach Anspruch 9,
**dadurch gekennzeichnet, dass**
das Trägerteil (12) ein Zwei-Komponententeil, insbesondere ein Zwei-Komponenten-Spritzgussteil, ist, wobei die Schablone (22) aus einer ersten Komponente und das restliche Trägerteil (12) aus einer zweiten Komponente hergestellt ist.

11. Bedieneinheit (10) nach einem der Ansprüche 1 bis 8,
**dadurch gekennzeichnet, dass**
die Schablone (22) als Beschichtung auf das Trägerteil (12) aufgebracht ist.

12. Bedieneinheit (10) nach Anspruch 11,
**dadurch gekennzeichnet, dass**
die Schablone (22) auf das Trägerteil (12) aufgedruckt oder eine mit dem Trägerteil (12) verbundene Folie ist.

13. Bedieneinheit (10) nach einem der vorhergehenden Ansprüche,
**dadurch gekennzeichnet, dass**
die Beleuchtungseinrichtung (20) dazu ausgelegt ist, zumindest ein Symbol und/oder zumindest ein Schriftzeichen anzuzeigen, das sich bei aktivierter Beleuchtungseinrichtung (20) an der Sichtseite der Dekorschicht (14) zumindest an einem Teil des wenigstens einen Bedienbereichs (16) optisch abzeichnet.

14. Bedieneinheit (10) nach einem der vorhergehenden Ansprüche,
**dadurch gekennzeichnet, dass**
das Trägerteil (12) und/oder die Schablone (22) wenigstens ein Symbol und/oder wenigstens ein Schriftzeichen aufweist, das sich bei aktivierter Beleuchtungseinrichtung (20) an der Sichtseite der Dekorschicht (14) zumindest an einem Teil des wenigstens einen Bedienbereichs (16) optisch abzeichnet.

## Claims

1. Operator control unit (10) for a motor vehicle, comprising
- a carrier part (12) through which light can shine;
- a decorative layer (14) through which light can shine which is at least indirectly arranged on the carrier part (12) and which comprises, on its visible side facing away from the carrier part (12), at least one tangible projection (18) and/or one tangible depression for identification of at least one operator control region (16);
**characterized by**
- an illuminating device (20) which is arranged below the carrier part (12) and which is designed to shine light through the rear side of the decorative layer (14);
- a template (22) which is arranged between the decorative layer (14) and the illuminating device (20) and which comprises opaque regions (24) and at least one region (26) through which light can shine, which is arranged below the at least one operator control region (16), for shining light through the at least one operator control region (16) .

2. Operator control unit (10) according to Claim 1, **characterized in that**
the visible side of the decorative layer (14) is an interior surface or an exterior surface.

3. Operator control unit (10) according to Claim 1 or 2,
**characterized in that**
at least one haptic element (28) is arranged under the decorative layer (14) and stands out at least as a partial region of the projection (18) on the visible side of the decorative layer (14).

4. Operator control unit (10) according to Claim 2, **characterized in that**
the haptic element (28) comprises a knitted spacer fabric, a foam plate and/or a plastics plate.

5. Operator control unit (10) according to one of the preceding claims,
**characterized in that**
the carrier part (12) comprises, on a side facing the decorative layer (14), at least one depression which stands out at least as a partial region of the depression.

6. Operator control unit (10) according to one of the preceding claims,
**characterized in that**
the projection (18) and/or the depression is at least partially formed by a local change in a material thickness of the decorative layer (14).

7. Operator control unit (10) according to one of the preceding claims,
**characterized in that**
the operator control unit (10) comprises a capacitive and/or pressure-sensitive sensing device which is designed to sense actuations of the at least one operator control region (16).

8. Operator control unit (10) according to one of the preceding claims,
**characterized in that**
the template (22) is arranged on an upper side, facing the decorative layer (14), or on a lower side, facing away from the decorative layer (14), of the carrier part (12).

9. Operator control unit (10) according to one of the preceding claims,
**characterized in that**
the template (22) and the carrier part (12) are in the form of a one-part structural part.

10. Operator control unit (10) according to Claim 9,
**characterized in that**
the carrier part (12) is a two-component part, in particular a two-component injection-moulded part, wherein the template (22) is produced from a first component and the remaining carrier part (12) is produced from a second component.

11. Operator control unit (10) according to one of Claims 1 to 8,
**characterized in that**
the template (22) is applied as a coating to the carrier part (12).

12. Operator control unit (10) according to Claim 11,
**characterized in that**
the template (22) is printed onto the carrier part (12) or is a film/foil connected to the carrier part (12) .

13. Operator control unit (10) according to one of the preceding claims,
**characterized in that**
the illuminating device (20) is designed to indicate at least one symbol and/or at least one character which, when the illuminating device (20) is activated, stands out optically on the visible side of the decorative layer (14) at least on a part of the at least one operator control region (16).

14. Operator control unit (10) according to one of the preceding claims,
**characterized in that**
the carrier part (12) and/or the template (22) comprises at least one symbol and/or at least one character which, when the illuminating device (20) is activated, stands out optically on the visible side of the decorative layer (14) at least on a part of the at least one operator control region (16).

## Revendications

1. Unité de commande (10) pour un véhicule automobile, comprenant
- une pièce de support (12) apte à être éclairée par transparence ;
- une couche décorative (14) apte à être éclairée par transparence, disposée au moins indirectement sur la pièce de support (12), qui présente au moins une saillie (18) et/ou un renfoncement tactile sur sa face visible opposée à la pièce de support (12) pour marquer au moins une zone de commande (16) ;
**caractérisée par**
- un dispositif d'éclairage (20) disposé en dessous de la pièce de support (12), qui est conçu pour éclairer la couche décorative (14) par l'arrière ;
- un gabarit (22) disposé entre la couche décorative (14) et le dispositif d'éclairage (20), qui présente des zones opaques (24) et au moins une zone (26) apte à être éclairée par transparence, disposée en dessous de l'au moins une zone de commande (16), pour éclairer par transparence l'au moins une zone de commande (16) .

2. Unité de commande (10) selon la revendication 1, **caractérisée en ce que**
la face visible de la couche décorative (14) est une surface intérieure ou une surface extérieure.

3. Unité de commande (10) selon la revendication 1 ou 2,
**caractérisée en ce que**
au moins un élément haptique (28) est disposé sous la couche décorative (14), lequel se dessine au moins comme une zone partielle de la saillie (18) sur la face visible de la couche décorative (14).

4. Unité de commande (10) selon la revendication 2,
**caractérisée en ce que**
l'élément haptique (28) présente un tricot d'espacement, une plaquette de mousse et/ou une plaquette de matière plastique.

5. Unité de commande (10) selon l'une des revendications précédentes,
**caractérisée en ce que**
l'élément de support (12) présente, sur une face tournée vers la couche décorative (14), au moins un renfoncement qui se dessine au moins comme une zone partielle du renfoncement.

6. Unité de commande (10) selon l'une des revendications précédentes,
**caractérisée en ce que**
la saillie (18) et/ou le renfoncement sont formés au moins partiellement par une modification locale d'une épaisseur de matériau de la couche décorative (14).

7. Unité de commande (10) selon l'une des revendications précédentes,
**caractérisée en ce que**
l'unité de commande (10) présente un dispositif de détection capacitif et/ou sensible à la pression, qui est conçu pour détecter des actionnements de l'au moins une zone de commande (16).

8. Unité de commande (10) selon l'une des revendications précédentes,
**caractérisée en ce que**
le gabarit (22) est disposé sur une face supérieure de la pièce de support (12) tournée vers la couche décorative (14) ou sur une face inférieure de la pièce de support (12) opposée à la couche décorative (14) .

9. Unité de commande (10) selon l'une des revendications précédentes,
**caractérisée en ce que**
le gabarit (22) et la pièce de support (12) sont réalisés sous forme de composant monobloc.

10. Unité de commande (10) selon la revendication 9,
**caractérisée en ce que**
la pièce de support (12) est une pièce à deux composants, en particulier une pièce à deux composants moulée par injection, le gabarit (22) étant fabriqué à partir d'un premier composant et le reste de la pièce de support (12) étant fabriqué à partir d'un deuxième composant.

11. Unité de commande (10) selon l'une des revendications 1 à 8,
**caractérisée en ce que**
le gabarit (22) est appliqué sous forme de revêtement sur la pièce de support (12).

12. Unité de commande (10) selon la revendication 11,
**caractérisée en ce que**
le gabarit (22) est imprimé sur la pièce de support (12) ou est un film relié à la pièce de support (12) .

13. Unité de commande (10) selon l'une des revendications précédentes,
**caractérisée en ce que**
le dispositif d'éclairage (20) est conçu pour afficher au moins un symbole et/ou au moins un caractère qui, lorsque le dispositif d'éclairage (20) est activé, se dessine optiquement sur la face visible de la couche décorative (14) au moins sur une partie de l'au moins une zone de commande (16).

14. Unité de commande (10) selon l'une des revendications précédentes,
**caractérisée en ce que**
la pièce de support (12) et/ou le gabarit (22) présente au moins un symbole et/ou au moins un caractère qui, lorsque le dispositif d'éclairage (20) est activé, se dessine optiquement sur la face visible de la couche décorative (14) au moins sur une partie de l'au moins une zone de commande (16).
